# EUROPÄISCHE PATENTANMELDUNG

(11) **EP 2 683 223 A1**
(43) Veröffentlichungstag der Anmeldung: **08.01.2014**
(21) Anmeldenummer: 13172770.3
(22) Anmeldetag: 19.06.2013
(51) Int. Cl.: H05B 33/08

(54) **Verfahren zur Ansteuerung von Leuchtdioden, erzielend Last-Wechselstrom in phase mit Speisewechselspannnung**

(30) Priorität: 04.07.2012 EP 12174995; 31.01.2013 DE 102013100992
(71) Anmelder: Zentrum Mikroelektronik Dresden AG, 01109 Dresden (DE)
(72) Erfinder: Müsch, Erhard, 59368 Werne (DE)
(74) Vertreter: Lippert, Stachow & Partner

(57) **Zusammenfassung**

Der Erfindung, welche eine Verfahren zur Ansteuerung von Leuchtdioden betrifft, liegt die Aufgabe zugrunde, ein Verfahren anzugeben, womit eine Verringerung des "Flicker Index", also des durch das menschliche Auge wahrnehmbaren Flackerns des LED-Lichts, bei der Ansteuerung der LEDs erreicht wird. Diese Aufgabe wird dadurch gelöst, dass der Verlauf des Stroms der Konstantstromquelle ILED 8 derart geregelt wird, dass die Nulldurchgänge des Netzwechselstroms mit denen der sinusförmigen Netzwechselspannung übereinstimmen und dass der Netzwechselstrom in seinen positiven und negativen Spitzenwerten begrenzt wird.

## Beschreibung

Die Erfindung betrifft ein Verfahren zur Ansteuerung von Leuchtdioden, bei welchem eine Kette von in Reihe geschalteten Leuchtdioden bereitgestellt wird, welche in Segmente unterteilt ist, wobei jedes Segment mehrere Leuchtdioden beinhalten kann und einen ersten Anschluss sowie einen zweiten Anschluss aufweist und wobei die Kette mit einer aus einer sinusförmigen Netzwechselspannung gleichgerichteten Eingangswechselspannung (VDC) derart betrieben wird, dass die Segmente in Abhängigkeit der Amplitude der Eingangswechselspannung (VDC) nacheinander zu-und abgeschaltet werden und wobei der Strom der zugeschalteten LEDs mittels einer steuerbaren Konstantstromquelle gesteuert wird.

LEDs (LED = Light Emitting Diode, Leuchtdiode) werden zunehmend für Beleuchtungszwecke eingesetzt, da sie gegenüber herkömmlichen Leuchtmitteln wie Glühlampen oder Fluoreszenzlampen eine Reihe von Vorteilen, insbesondere einen geringeren Energiebedarf und eine längere Lebensdauer, aufweisen. Aufgrund ihrer halbleitertypischen Strom-Spannungscharakteristik ist es sinnvoll, LEDs mit einem Konstantstrom zu betreiben.

Beim Betrieb von Leuchtmitteln mit LEDs aus einem Lichtnetz sind daher schaltungstechnische Maßnahmen zu treffen, um aus einer versorgenden hohen Wechselspannung, welche beispielsweise 230 VAC betragen kann, den erforderlichen konstanten Gleichstrom mit der geringen Spannung von typischerweise 3 ... 4 V je LED zu erzeugen. Wobei diese Werte typischerweise für sogenannte weiße LEDs gelten und für andere LEDs abweichen können.

Neben dem verbreiteten Einsatz von sogenannten AC-DC-Konvertern, welche meist aus einem Gleichrichter und einem Schaltnetzteil bestehen, ist ein Verfahren bekannt, bei dem eine Kette von in Reihe geschalteten LEDs über eine oder mehrere lineare Stromquellen direkt aus der gleichgerichteten Wechselspannung angesteuert wird.

Diese Anordnung wird auch als "Direct AC LED" bezeichnet. Dazu kann vorteilhafterweise die LED-Kette in Segmente aufgeteilt werden, die entsprechend der momentanen Wechselspannung einzeln oder hintereinander geschaltet bestromt werden. Die Anzahl der in Reihe geschalteten LEDs und damit die Flussspannung der gesamten LED-Kette wird so ausgelegt, dass sie einem nennenswerten Anteil der Amplitude der Netzspannung entspricht, welcher beispielsweise im Bereich von 80 bis 90% der Amplitude der Netzspannung liegen kann.

Der Spannungsabfall über der linearen Stromquelle wird somit gering gehalten, was zu einem verhältnismäßig hohen Wirkungsgrad führt. Bei geringerer Momentanspannung wird nur ein Teil der LED-Kette, entsprechend der anordnungsseitigen Segmentierung der LEDs, ebenfalls mit relativ geringem Spannungsabfall über der zugehörigen Stromquelle angesteuert. Dadurch wird der Stromflusswinkel innerhalb einer halben Netzperiode vergrößert, was zu einer gleichmäßigeren Lichtabgabe führt. Optional kann der Strom der linearen Stromquelle oder Stromquellen entsprechend der momentanen Netzspannung moduliert werden, um den "Power Factor" zu erhöhen, d. h. den Oberwellengehalt des Versorgungsstroms gering zu halten.

Vorteile dieses bekannten Verfahrens gegenüber der Verwendung von AC-DC Konvertern sind kleinere Bauform und geringere Kosten der Ansteuerelektronik sowie ein besseres EMV-Verhalten (EMV = elektro-magnetische Verträglichkeit) der Anordnung, da keine schnellen Schaltflanken auftreten.

Ein grundsätzlicher Nachteil besteht in der hohen Welligkeit der Lichtabgabe mit der doppelten Netzfrequenz, die von empfindlichen Personen als störend empfunden wird. Selbst bei einer konstanten Bestromung der LEDs reduziert sich die Lichtabgabe, wenn weniger Segmente, als in der LED-Kette angeordnet, aktiv sind.

Wenn die Momentanspannung, mit welcher die LED-Ketten angesteuert werden, unter die Flussspannung des ersten Segments der Ketten absinkt, wird der Strom zu Null, d. h. in jeder Netzperiode gibt es zwei Lücken, in denen die LEDs nicht bestromt werden. Im Gegensatz zum Glühfaden einer Glühlampe, der eine erhebliche thermische Trägheit aufweist und damit die Welligkeit der zugeführten Leistung bedämpft, folgt die Lichtabgabe einer LED dem Strom praktisch verzögerungsfrei. Insbesondere diese Bestromungslücken können zu einem als unangenehm empfundenen Eindruck des "Flimmern" oder "Flackern" der Beleuchtung führen, welcher im englischen als "Flicker" bezeichnet wird.

Ein weiterer schaltungstechnischer Nachteil der Ansteuerung besteht darin, dass die Umschaltschwellen der einzelnen Segmente an die Anzahl der LEDs je Segment und die tatsächliche Flussspannung angepasst werden müssen.

Somit besteht die Aufgabe der Erfindung darin, ein Verfahren zur Ansteuerung von Leuchtdioden anzugeben, womit eine Verringerung des "Flicker Index", also des durch das menschliche Auge wahrnehmbaren Flackerns des LED-Lichts, bei der Ansteuerung der LEDs erreicht wird.

Bei einer Anordnung zur Ansteuerung von Leuchtdioden wird daher vorgeschlagen, dass der Verlauf des Stroms der Konstantstromquelle ILED derart geregelt wird, dass seine Nulldurchgänge mit denen der sinusförmigen Netzwechselspannung übereinstimmen und dass der Strom in seinen positiven und negativen Spitzenwerten begrenzt wird.

Der Verlauf des Stromes ILED, welcher mittels einer Konstantstromquelle erzeugt wird, wird erfindungsgemäß in seiner Kurvenform gesteuert. Dazu wird die Konstantstromquelle als steuerbare Konstantstromquelle ausgeführt. Der Strom einer derart gesteuerten Konstantstromquelle weise gewöhnlicherweise einen sinusförmigen Verlauf auf, wobei diesem der sinusförmige Verlauf der eingangsseitigen Netzwechselspannung vor dem Gleichrichten der Spannung zugrunde liegt.

Erfindungsgemäß erfolgt eine Verformung der Stromkurve derart, dass eine Abflachung im Bereich des positiven und negativen Maximalwerts erfolgt, dieser also nicht erreicht wird. Mittels dieser Reduzierung der Maxima wird die maximale Helligkeit der LEDs reduziert und der Eindruck des Flackerns gemindert.

In einer Ausgestaltung der Erfindung ist vorgesehen, dass der positive und negative Spitzenwert auf einen Bereich zwischen 80 und 95% des Maximalwertes begrenzt wird.

Prinzipiell kann die Reduzierung der Maxima beliebig stark erfolgen. Praktisch hat diese Abweichung des Stromkurvenverlaufs aber eine Auswirkung auf den Oberwellengehalt des Stromes. Da der Oberwellengehalt meist vom Netzbetreiber vorgeschrieben wird, und im Beispiel maximal 20% betragen darf, kann die Reduzierung der Maxima nur im Bereich zwischen 80% und 99% des Wertes des Maximalstromes erfolgen. Praktische Werte können 95%, 90%, 85% oder 80% des Maximalwertes sein, wobei auch jeder Zwischenwert einstellbar ist.

In einer anderen Ausführung der Erfindung ist vorgesehen, dass der Anstieg des Stromes in der positiven und negativen Halbwelle gegenüber einem sinusförmigen Verlauf steiler erfolgt.

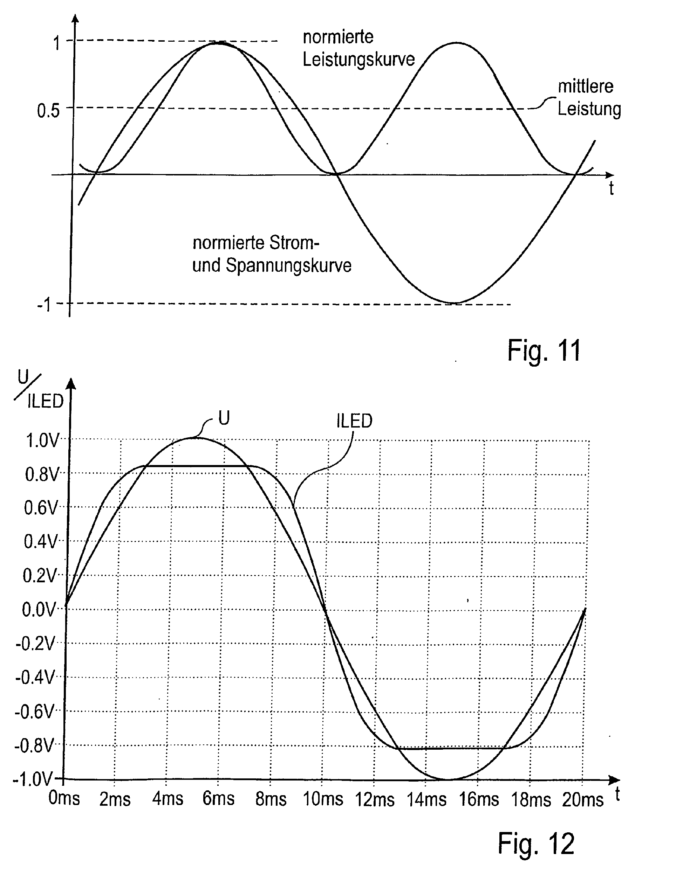

Erfindungsgemäß ist vorgesehen, dass der Anstieg des Stromes ILED gegenüber einem sinusförmigen Stromverlauf steiler erfolgt. In einem Beispiel nähert sich der Stromverlauf einem trapezförmigen Verlauf an, wie in der Figur 12 dargestellt ist.

Die Erfindung soll nachfolgend anhand eines Ausführungsbeispiels näher erläutert werden. In den zugehörigen Zeichnungen zeigt
- Fig. 1: eine mögliche Ausführung einer Anordnung zur Ansteuerung von Leuchtdioden nach dem Stand der Technik in einer Variante als "Direct AC LED Drivers",
- Fig. 2: eine andere mögliche Ausführung einer Anordnung zur Ansteuerung von Leuchtdioden nach dem Stand der Technik in einer Variante als "Direct AC LED Drivers",
- Fig. 3: eine erfindungsgemäße Schaltungsanordnung zur Ansteuerung von Leuchtdioden mit einer automatischen Anpassung der Strompfade an die Flussspannung der LED Segmente,
- Fig. 4: eine weitere erfindungsgemäße Schaltungsanordnung zur Ansteuerung von Leuchtdioden mit einer alternativen automatischen Anpassung mit gestuften Gate-Spannungen,
- Fig. 5: eine Darstellung der Spannungsverläufe der gleichgerichteten Netzspannung und der Segmentspannungen über eine halbe Netzperiode und
- Fig. 6: eine Schaltungsanordnung zur automatischen Steuerung eines "Bleeder Current".
- Fig. 7: eine Schaltungsanordnung zur automatischen Steuerung der Aufladung eines "Energiereserve Kondensators" CER
- Fig. 8: eine Schaltungsanordnung zur automatischen Steuerung des Lade- und Entladevorgangs von beispielhaft zwei Kondensatoren CER1 und CER2,
- Fig. 9: eine Darstellung der Spannungsverläufe an den Kondensatoren CER1 und CER2 über eine halbe Netzperiodendauer,
- Fig. 10: eine Ausschnittsvergrößerung der Darstellung der Spannungsverläufe aus der Figur 8,
- Fig. 11: eine Darstellung eines Strom-Spannungs-Verlaufs sowie der Leistung über eine Schwingungsperiode in einer normierten Darstellung und
- Fig. 12: eine Darstellung des erfindungsgemäß vorgeschlagenen Kurvenverlaufs des Stromes mit einem Oberwellengehalt THD < 20%, wobei in der Darstellung für Vergleichszwecke auch der normierte Eingangsspannungsverlauf aufgezeigt ist.

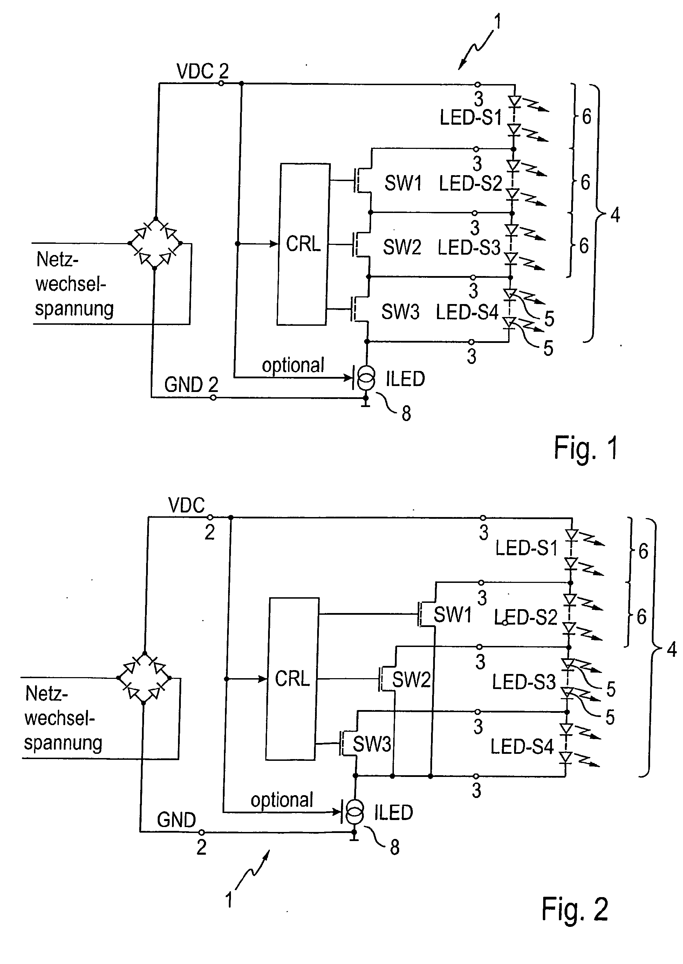

In der Figur 1 und 2 sind zwei mögliche Realisierungen einer Anordnung 1 zur Ansteuerung von Leuchtdioden 5 nach dem Stand der Technik gezeigt. Dargestellt sind sogenannte "Direct AC LED" Treiber mit jeweils vier LED-Segmenten 6, welche mit LED-S1 bis LED-S4 bezeichnet werden. Die Kette 4 wird aus der gleichgerichteten Netzspannung VDC 2 gespeist, wobei eine masseseitige Stromquelle 8 ILED einen Konstantstrom erzeugt.

In der Darstellung in Figur 1 werden die Segmente 6 durch die Schaltelemente SW1 bis SW3, welche beispielsweise als MOSFETs ausgeführt werden können, entsprechend der anliegenden Momentanspannung über der Kette 4 bei Bedarf kurzgeschlossen.

In der Ausgestaltung nach Figur 2 werden die Segment-Abgriffe 7 entsprechend der Momentanspannung über der Kette 4 mittels der Schaltelemente SW1 bis SW3 auf die gemeinsame Stromquelle 8 ILED geschaltet werden. Eine Steuerungseinheit CRL dient dazu, den Strom auf die Anzahl der Segmente 6 passend zur Momentanspannung zu verteilen. Die Stromquelle 8 ILED kann optional entsprechend der momentanen Netzspannung VDC moduliert werden.

Nachfolgend wird die erfindungsgemäße automatische Anpassung der Schaltschwellen an die Flussspannung der Segmente beschrieben.

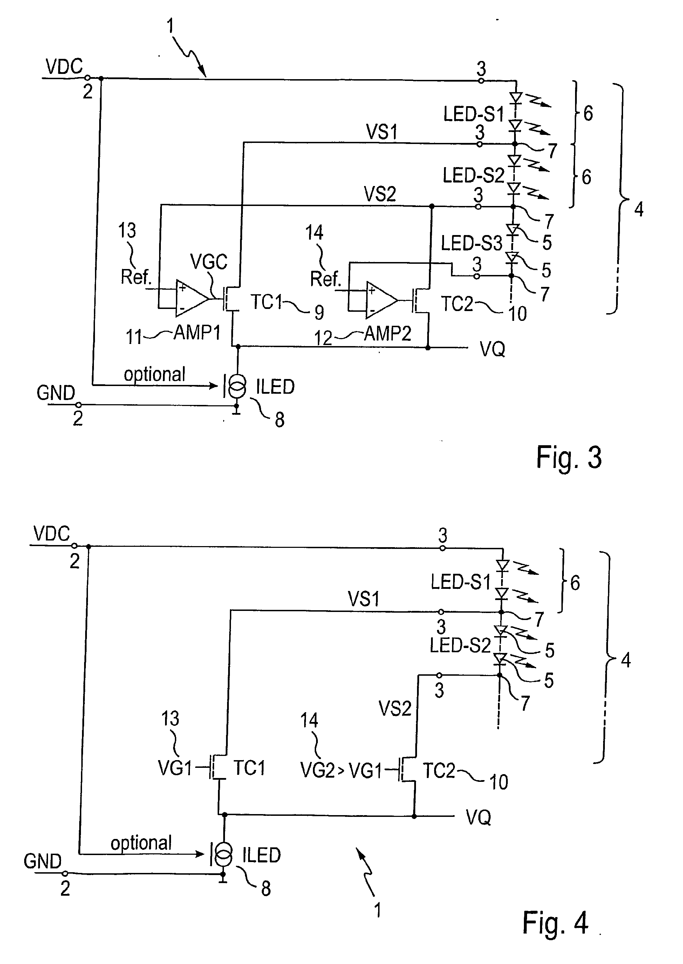

Die Figur 3 zeigt das Prinzip am Beispiel von drei Segmenten 6 LED-S1 bis LED-S3 einer LED-Kette 4 mit einer beliebigen Anzahl von LEDs 5 im jeweiligen Segment 6. Die Anzahl der Segmente 6 kann beliebig erhöht werden, was in der Figur mit einer Strich-Strich-Linie am Anschluss 7 des Segments LED-S3 6 dargestellt ist. Ebenso ist die Anzahl der LEDs 5 je Segment 6 frei wählbar.

Die Anode der "oberen" LED 5 des Segments LED-S1 6 ist mit der Versorgungsspannung VDC 2, d. h. der gleichgerichteten Netzspannung, verbunden. Jedes Segment 6 der Kette 4 weist einen ersten und einen zweiten Anschluss 7 auf. In der Figur 3 ist der erste Anschluss des ersten Segments 6 mit der Spannung VDC verbunden. Der zweite Anschluss 7 des ersten Segments 6 ist mit dem ersten Anschluss des nachfolgenden Segments 6 der Kette 4 verbunden. Außerdem ist dieser zweite Anschluss 7 mit einem Schaltmittel 9, 10, ... verbunden.

Die gesamte LED-Kette 6 wird über diese zu- und abschaltbaren Schaltmittel 9, 10 von einer gemeinsamen masseseitigen Stromquelle 8 ILED gespeist. Oberhalb der Stromquelle 8 befinden sich für jeden Strompfad n als Schaltmittel sogenannte Kaskoden-Elemente TC1 und TC2 9, 10, gebildet beispielsweise durch MOSFETs, Bipolar-Transistoren oder IGBTs. Als Kaskode bezeichnet man die Hintereinanderschaltung zweier Transistoren, wobei der "untere" Transistor (bei n-Kanal oder NPN) die Steuerung übernimmt, während der "obere" Transistor zur Erhöhung der Spannungsfestigkeit und/oder der Ausgangsimpedanz dient.

Derart werden n Stufen innerhalb der Anordnung ausgebildet, welche jeweils ein n-tes LED-Segment 6 und mindestens ein n-tes Schaltmittel 9 oder 10 umfassen. Die erste Stufe umfasst das erste Segment 6 der Kette 4 sowie das erste Schaltmittel 9. Zusätzlich kann auch noch ein das erste Schaltmittel 9 ansteuerndes Element beinhaltet sein. Im Beispiel der Figur 3 ist dies ein erster Komparator oder Verstärker 11 AMP1.

Die Kaskoden-Elemente 9, 10 begrenzen die Spannung VQ über der Stromquelle 8 und nehmen einen Teil der Differenz zwischen momentaner VDC und der Flussspannung der aktiven Segmente 6 der LED-Kette 4 auf. Die an die Kaskoden-Elemente 9, 10 angelegte Gate- bzw. Basisspannung VGC bestimmt die maximale Spannung VQ. Für die automatische Schwellen-Adaption ist es vorteilhaft, diese Spannung niedrig zu halten.

Steigt die Spannung VDC 2 von einem Wert kleiner als die Flussspannung des Segments LED-S1 6 beginnend an, so wird zunächst beim Erreichen der Flussspannung das Segment LED-S1 6 beginnen, Strom zu führen. Ist der durch die Stromquelle 8 begrenzte Strom erreicht und hat VQ den vom Kaskoden-Element 9, 10 begrenzten Wert erreicht, so steigt bei weiterer Erhöhung von VDC 2 die Segmentspannung VS1 an, während VQ annähernd konstant bleibt.

Zunächst fließt kein Strom durch das Segment LED-S2 6 und die Segmentspannung VS2 entspricht etwa der Spannung VQ. Erreicht VDC die Summe der Flussspannungen von LED-S1 6 und LED-S2 6, so beginnt auch LED-S2 6 zu leiten, und der Strom teilt sich zwischen TC1 9 und TC2 10 auf. Der Summenstrom wird weiterhin durch die gemeinsame Stromquelle 8 ILED bestimmt. Bei weiterer Erhöhung von VDC 2 steigt nun die Spannung VS2 gegenüber VQ an. Dieser Anstieg signalisiert, dass LED-S2 6 leitend ist und der Strompfad über TC1 9 abgeschaltet werden kann. Die Abschaltung kann beispielsweise über einen Verstärker oder Komparator 11 AMP erfolgen, dessen Vergleichswert um einen festlegbaren Betrag über der Spannung VQ liegt. Zur Vermeidung von Oszillationen um den Schaltpunkt ist es vorteilhaft, einen Komparator 11 mit einer Hysterese zu versehen. Dies gilt insbesondere für den Fall, dass als Kaskoden-Elemente 9, 10 relativ hochohmige MOSFETs verwendet werden. Bei Einsatz von Bipolartransistoren muss deren Basisstrom begrenzt werden.

Vorteilhaft zur Vermeidung eventueller Störabstrahlung durch die Umschaltvorgänge ist eine graduelle Abschaltung, etwa durch einen Verstärker oder einfachen Inverter beispielsweise mit mäßiger Verstärkung anstelle des Komparators.

Eine Übernahme des Stroms durch TC2 10 ohne Schalten von TC1 9 ist ebenfalls möglich, indem eine Steuerspannung VG2 > VG1 angelegt wird, wie in der Figur 4 dargestellt. Wenn das Segment LED-S2 6 leitend wird, erhöht TC2 10 die Spannung VQ und TC1 9 wird automatisch zugesteuert. Die Spannungsdifferenz zwischen VG2 14 und VG1 13 muss allerdings groß genug sein, damit TC1 9 sicher sperrt, was insbesondere bei einer Integration und Verwendung relativ hochohmiger MOSFETs zu beachten ist.

Bei größerer Anzahl "n" von LED Segmenten kann dies zu einer erheblichen "Spreizung" der steuernden Gate-Spannungen VG1 bis VGn führen. Vorteilhaft ist daher die Kombination der gestuften Ansteuerspannungen mit dem Abschalten vorhergehender Strompfade.

Besteht die LED-Kette 4 aus mehr als zwei Segmenten 6, so wiederholt sich der beschriebene Vorgang bei weiterem Anstieg von VDC 2 für die folgenden Stufen oder Strompfade n+1, n+2 ... usw. Für das "letzte" Segment 6 der Kette 4 ist nicht unbedingt ein Kaskoden-Element 9, 10 erforderlich, es ist jedoch schaltungstechnisch vorteilhaft zur Begrenzung der Spannung VQ. Dieses letzte Kaskoden-Element 9, 10 muss nicht geschaltet werden. In der Figur 3 sind beispielhaft zwei Kaskoden-Elemente 9 und 10 dargestellt.

Nachdem VDC 2 seine Amplitude überschritten hat und die Spannung wieder abfällt, werden mit derselben Schaltung die Kaskoden-Elemente 9, 10 in umgekehrter Reihenfolge entsprechend der momentanen Spannung wieder aktiviert.

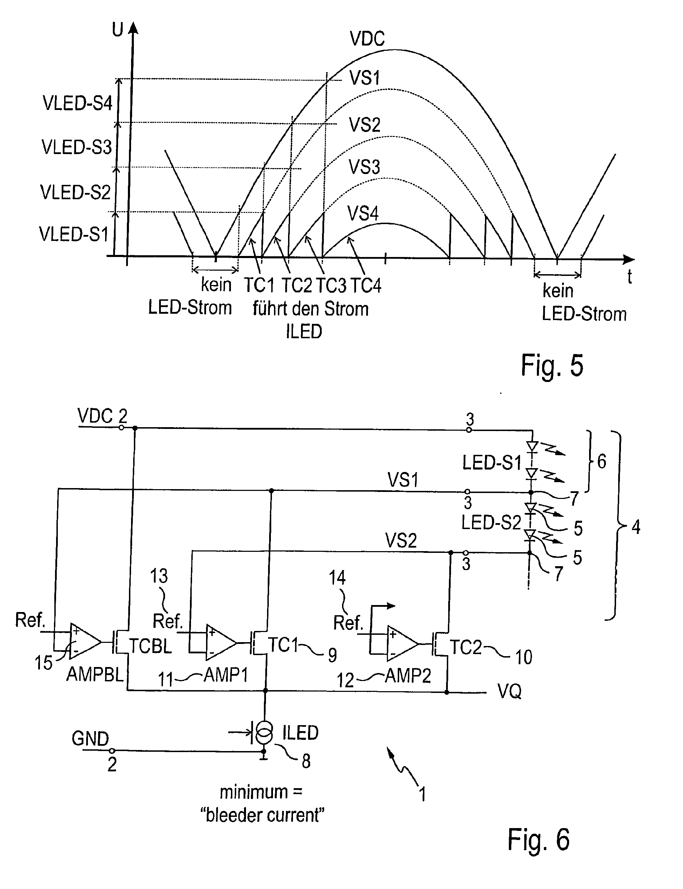

Die Figur 5 zeigt die Spannungsverläufe während einer halben Netzperiode am Beispiel einer LED-Kette 4 bestehend aus vier Segmenten 6 mit gleicher Anzahl von LEDs 5. Dargestellt ist, dass im Bereich um den Nulldurchgang der netzseitigen Wechselspannung 2 keine LED 5 betrieben wird und kein LED-Strom fließt. Im weiteren Zeitverlauf einer positiven Halbwelle steigt die Spannung VDC 2 an, bis die Flussspannungen der LEDs 5 im Segment VLED-S1 6 erreicht wird, Strom durch das Segment VLED-S1 6 fließt und dieses Segment 6 somit leuchtet. Im weiteren Verlauf der positiven Halbwelle steigt die Spannung VDC 2 weiter an, bis die Flussspannungen der LEDs 5 in den Segmenten VLED-S1 6 und VLED-S2 6 erreicht werden. Ab diesem Zeitpunkt fließt Strom auch durch das Segment VLED-S2 6, welches nun ebenfalls leuchtet.

Dieser Vorgang ist weiter dargestellt, bis alle Segmente 6 VLED-S1 bis VLED-S4 stromdurchflossen sind und leuchten. Nach dem Erreichen des Maximums der Spannung VDC 2 nimmt diese sinusförmig ab, was dazu führt, dass die Flussspannung des Segments VLED-S4 6 nicht mehr erreicht wird. Dies führt zur Unterbrechung des Stromflusses im Segment VLED-S4 6 und somit zu dessen Abschaltung. Nachfolgend werden nacheinander die Segmente VLED-S3 6, VLED-S2 6 und VLED-S1 6 abgeschalten, wodurch kein Strom mehr durch die Kette 4 fließt.

Die Ausführung mit gleichartigen Segmenten 6 kann vorteilhaft für die Bestückung einer Applikation sein, ist aber keine Voraussetzung für die Funktionalität des Verfahrens. Der Spannungsabfall VQ über der Stromquelle 8 wurde in der Darstellung zum besseren Verständnis vernachlässigt.

In den Figuren 3, 4 und 6 ist die Konstantstromquelle 8 mit einem Steuereingang dargestellt, über welchen der Konstantstrom steuerbar ist. So kann optional mittels der Eingangsspannung VDC 2 der Stromverlauf der Konstantstromquelle an den beispielsweise sinusförmigen Stromverlauf der gleichgerichtete pulsierenden Eingangsspannung VDC angepasst werden. Diese Anpassung führt durch die Reduzierung von störenden Oberwellen zu einer Verbesserung des sogenannten Powerfaktors.

Für den Betrieb einer LED-Leuchte an einem Dimmer, welcher mittels eines Phasenanschnitts- (Triac) oder Phasenabschnittsverfahrens (MOSFET oder IGBT) arbeitet, muss ein Strompfad zum Aufladen eines Kondensators, der den Stromflusswinkel innerhalb einer Halbwelle der Netzspannung bestimmt, bereitgestellt werden.

Die zuvor beschriebene Schaltung 1 führt erst dann Strom, wenn die Flussspannung des ersten LED-Segments 6 erreicht ist und erst dann kann der zeitbestimmende Kondensator geladen werden. Ohne weitere Maßnahmen verringert sich daher der maximale mit einem Dimmer erreichbare Stromflusswinkel. Um diese Verkürzung zu vermeiden, ist es vorteilhaft, einen zusätzlichen Strompfad einzurichten, der bereits aktiv ist, wenn die Netzspannung VDC noch kleiner als die Flussspannung des ersten Segments 6, beispielsweise LED-S1, ist.

Dieser Strom wird als "Bleeder Current" bezeichnet, da er nicht zur Ansteuerung der LEDs 5 selbst genutzt wird. In der Figur 6 ist die Schaltung aus Figur 4 um ein Kaskoden- oder Schalt-Element TCBL 16 und einen Komparator bzw. Verstärker 15 AMPBL nach demselben Prinzip erweitert worden. Der "Bleeder Current" fließt so lange, bis VDC die Flussspannung des Segments LED-S1 6 überschritten hat. Dabei steigt die Spannung VS1 an und der Komparator 15 AMPBL deaktiviert den "Bleeder-Pfad". Während TCBL 16 aktiv ist, stellt die Stromquelle ILED 8 den "Bleeder Current" bereit.

Die Polarität der beschriebenen Topologie kann umgedreht werden, d. h. die Stromquelle 8 liegt dann an der positiven Versorgungsspannung (VDC) 2 und die Katode der "untersten" LED 5 an der negativen Versorgung (GND). Ebenso gut kann eine "high side" Stromquelle durch einen masseseitigen oder auch durch einen potenzialgetrennten Stromfühler gesteuert werden.

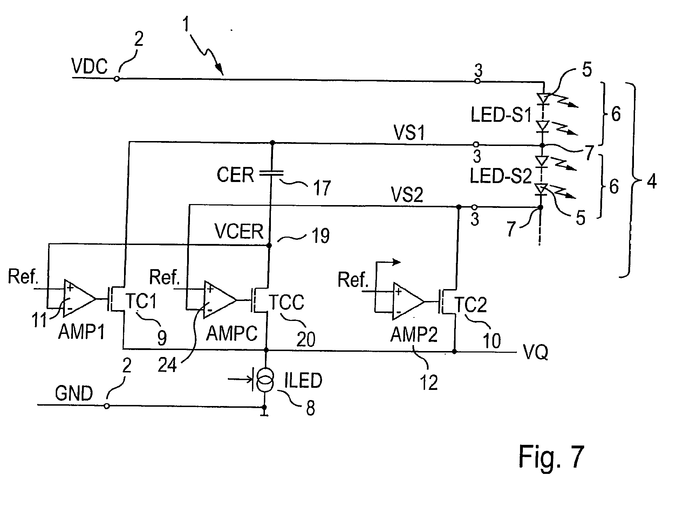

Nachfolgend wird das erfindungsgemäße Auffüllen der sogenannten Stromlücken bei der Ansteuerung der LEDs mithilfe der Schaltungsanordnung der Figur 7 beschrieben.

Sobald bei einem Anstieg der Spannung VDC 2 wie zuvor beschrieben ein Kaskoden-Element 9 den Strom der Stromquelle ILED 8 führt, erhöht sich dessen Spannungsabfall entsprechend der Differenz aus der Spannung VDC und der Summenspannung des oder der aktiven Segmente 6 (LED-S1, ...), bis das nächste Kaskoden-Element 10 den Strom übernimmt. Dieser Stromfluss im Linearbereich des Elements 9 kann genutzt werden, um damit einen Kondensator 17 aufzuladen. Die Ladespannung kann bis zur Flussspannung des "nächsten" Segments 6 (z. B. LED-S2) betragen, ohne dass der Summenstrom und der Stromfluss in den LED-Segmenten 6 beeinträchtigt werden. Dieser Ladevorgang kann für ein einzelnes oder für mehrere Kaskoden-Elemente 9, 10 mit entsprechend mehreren Kondensatoren 17, welche in der Figur 7 nicht dargestellt sind, durchgeführt werden.

Wurde der Kondensator 17 während der steigenden Flanke der Spannung VDC nicht bis zur Flussspannung des nächsten Segments 6 (z. B. LED-S2) aufgeladen, so kann er während der fallenden Flanke der Spannung VDC weiter geladen werden, solange die Spannungsdifferenz, zwischen der momentanen Spannung VDC und der Spannung über dem Kondensator 17 noch größer ist, als die Spannung über dem Kondensator 17 selbst.

Die Verteilung des Stroms zwischen dem "regulären" Pfad zum Betreiben der LEDs 5 der Segmente 6 und dem Pfad zum Laden des Kondensators 17 oder eines weiteren, erfolgt vorteilhaft nach demselben Verfahren, wie es zuvor für die automatische Anpassung an die Flussspannungen der LED-Segmente 6 beschrieben wurde.

Der Kondensator 17 verhält sich dabei wie ein Segment mit veränderlicher Spannung. Die Figur 7 zeigt einen entsprechenden Schaltungsausschnitt für einen "Energiereserve"-Kondensator CER und zwei LED-Segmenten LED-S1 und LED-S2. Nachdem die Spannung VDC die Flussspannung des ersten Segments LED-S1 6 überschritten hat, steigt die Spannung VS1 an und der Kondensator CER 17 wird über das Kaskoden-Element TCC 20 aufgeladen. Solange VDC schneller ansteigt, als die Spannung über dem Kondensator CER 17, wird auch das Potenzial im Knoten VCER 19 angehoben und die erste Steuereinheit AMP1 11 schaltet den ersten Schalter TC1 9 aus und der gesamte Strom der Stromquelle ILED 8 wird zum Laden des Kondensators CER 17 genutzt.

Ist der Spannungsanstieg von VDC nicht ausreichend steil, damit der Kondensator CER 17 den gesamten Strom aufnehmen kann, so reduziert sich die Spannung im Knoten VCER 19, und der Schalter TC1 9 wird aktiv. Eine lineare Ansteuerung der als Kaskoden-Elemente ausgeführten Schalter 9, 10 und 20 ist hier besonders vorteilhaft gegenüber dem Schalten mit Komparatoren, um ein Hin- und Herschalten des Stroms beispielsweise zwischen den elektronischen Schaltern TCC 20 und TC1 9 zu vermeiden.

Erreicht die Spannung VDC die Summe der Flussspannungen der Segmente LED-S1 6 und LED-S2 6, so steigt die Spannung VS2 an und der Ladevorgang des Kondensators CER 17 wird abgebrochen. Der Schalter TC1 9 war entweder bereits abgeschaltet oder wird durch das Ansteigen von der Spannung im Knoten VCER 19 abgeschaltet. Bedarfsweise kann die Spannung VS2 auch zusätzlich genutzt werden, um dem Schalter TC1 9 zu deaktivieren.

Sind alle LED-Segmente 6 aktiv, so kann ein Kondensator aus der Differenz der Wechseleingangsspannungen VDC und der Summe der Flussspannungen der Segmente V_{LED} (V_{LED} = V_{LED-S1} + V_{LED-S2} + V_{LED-S3} + ... + V_{LED-Sx}) geladen werden. Da der Verlauf der Netzspannung im Bereich der Amplitude recht flach ist und damit die zur Verfügung stehende Zeit zum Laden eines Kondensators (z. B. CER 17) relativ lang ist, kann hier verhältnismäßig viel Ladung auf der Kapazität angesammelt werden.

Es ist nicht zwingend notwendig, den Ladevorgang eines Kondensators (z. B. 17) zu stoppen, wenn das nächste LED Segment 6 (z. B. LED-S2) aktiv wird, vielmehr kann ein Kondensator 17 auch parallel zu zwei oder mehreren Segmenten 6 geladen werden. Dies vereinfacht den Schaltungsaufwand, erhöht allerdings auch den "Flicker Index", d. h. die relative Welligkeit des Lichtstroms, bezogen auf die Kurvenform des Gesamtstroms ILED.

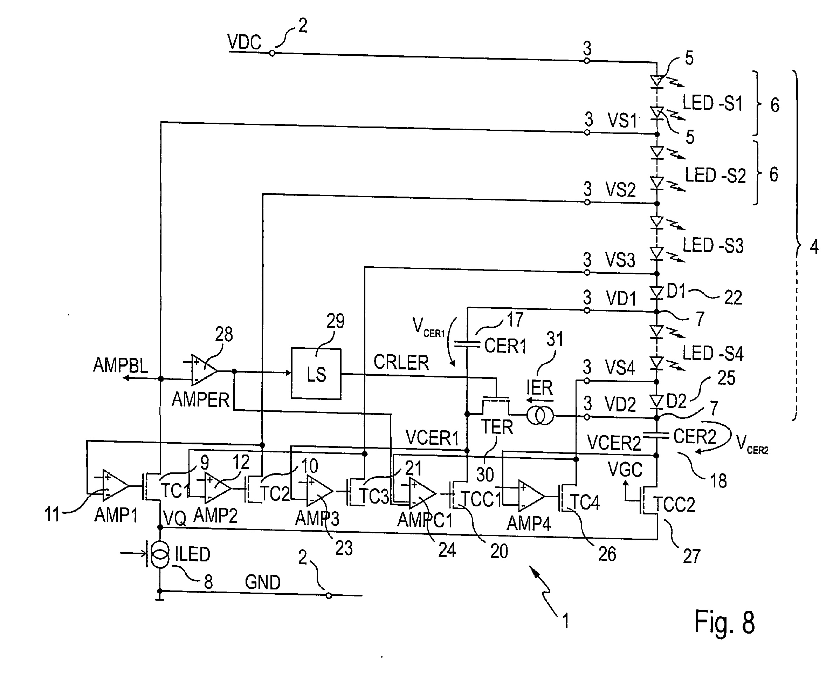

In einer Ausführung, welche in der Figur 8 dargestellt ist, wird zusätzlich neben diesem ersten Kondensator 17 ein zweiter Kondensator 18 in der Schaltung angeordnet und in der oben beschriebenen Weise geladen.

Ein Teil der im Kondensator 17 bzw. in den Kondensatoren 17 und 18 gespeicherten Energien kann genutzt werden, um die mit der doppelten Netzfrequenz auftretende Welligkeit des Lichtstroms zu reduzieren, speziell um die Bestromungslücke zu schließen, die entsteht, wenn die Spannung VDC unter die Flussspannung eines einzelnen Segments 6 (LED-S1) absinkt. Dazu ist es notwendig, dass die Kondensatorspannung höher ist, als die Flussspannung mindestens eines LED-Segments 6. Abhängig von der Dimensionierung der Schaltung kann es erforderlich sein, die Kondensatoren 17, 18 während des Entladevorgangs hintereinander zu schalten.

Eine mögliche Anordnung mit vier Segmenten (LED-S1 bis LED-S4) und zwei Kondensatoren 17 und 18, die sequenziell geladen und zum Auffüllen der Stromlücke in Reihe geschaltet entladen werden, zeigt die Figur 8. Zur Vereinfachung der Darstellung wurde der "Bleeder Current" in der Figur 8 nicht berücksichtigt. Selbstverständlich kann dieser aus der Figur 6 bekannte Schaltungsteil auch in der Anordnung der Figur 8 genutzt werden.

Bei steigender Spannung VDC werden zunächst nacheinander die Kaskoden-Elemente TC1 9, TC2 10 und TC3 21 leitend und der Strom der Konstantstromquelle ILED 8 fließt in derselben Reihenfolge durch die Segmente 6 LED-S1, LED-S1 + LED-S2 und LED-S1 + LED-S2 + LED-S3. Erreicht die Spannung VS3 die noch verbliebene Spannung am Kondensator CER1 17 zuzüglich der Diodenflussspannung der Diode D1 22, so wird ein Ladestrom in den Kondensator CER1 17 eingespeist und bei einem weiteren Anstieg der Spannung VDC erhöht sich auch die Spannung V_{CER1} über der Kapazität CER1. Die Steuereinheit AMP3 23 steuert den Schalter TC3 21 zu, und der gesamte Strom der Stromquelle ILED 8 steht zum Laden des Kondensators CER1 17 zur Verfügung.

Voraussetzung hierfür ist, dass die Spannungsänderung dVDC/dt größer ist als die Änderung dV_{CER1}/dt beim Strom ILED 8. Der Kondensator CER1 17 ist also hinreichend groß zu wählen. Ist diese Bedingung nicht erfüllt, so teilt sich der Strom der Stromquelle ILED 8 zwischen den Kaskoden-Elementen TC3 21 und TCC1 20 auf und es wird nur so viel Strom zum Laden von der Kapazität CER1 17 genutzt, dass dV_{CER1}/dt und dVDC/dt gleich sind. Die Bestromung der LEDs 5 der Segmente 6 wird dadurch aber nicht beeinflusst.

Wird nach einem weiteren Anstieg der Spannung VDC auch die Flussspannung von des Segments 6 LED-S4 überschritten, so wird der Ladevorgang der Kapazität CER1 17 durch einen Schaltvorgang der Steuereinheit AMPC1 24 und Schalters TCC1 20 beendet. Bis zum Erreichen der auf Kapazität CER2 18 verbliebenen Spannung V_{CER2} zuzüglich der Diodenflussspannung der Diode D2 25 führt der Schalter TC4 26 den Strom der Stromquelle ILED 8. Danach wiederholt sich der oben für die Schalter TC3 21 und TCC1 20 beschriebene Vorgang in den Kaskoden-Elementen TC4 26 und TCC2 27 und die Kapazität CER2 18 wird aufgeladen. Dieser Ladevorgang wird beendet, wenn die Spannung VDC nach dem Überschreiten ihrer Amplitude wieder so weit abgefallen ist, dass die Diode D2 25 sperrt. Danach übernimmt der Schalter TC4 26 wieder den Strom der Quelle ILED 8. Das Kaskoden-Element TCC2 27 muss nicht angesteuert werden, sondern kann kontinuierlich aktiv sein. Dies kann beispielsweise dadurch erreicht werden, dass das Gate dieses MOSFET-Schalters 27 mit der Spannung VGC verbunden wird. Die Dioden D1 22 und D2 25 verhindern die Entladung der Kondensatoren CER1 17 und CER2 18 bei einer fallenden Flanke von Spannung VDC.

Die in den Kapazitäten CER1 17 und CER2 18 akkumulierten Ladungen werden beispielhaft genutzt, um das Segment 6 LED-S4 zu bestromen, sobald die Spannung VDC in den Bereich oder unter die Flussspannung des Segments 6 LED-S1 absinkt. Das hierfür erforderliche Steuersignal wird auf dieselbe Weise gewonnen, wie bei der Ansteuerung des "Bleeder Current" bereits oben beschrieben und in der zugehörigen Figur 6 dargestellt wurde.

In einer Ausführung können gegebenenfalls die Einheiten AMPER 28 zur Steuerung der Energiereserve und AMPBL 15 zu einer Einheit zusammengefasst werden. Eine Stufe zur Pegelanpassung LS 29 steuert mit einem Steuersignal CRLER ein Schaltelement TER 30, das die Kondensatoren CER1 17 und CER2 18 in Reihe schaltet. Aus der Summenspannung der beiden Kondensatoren 17 und 18 wird nun das Segment 6 LED-S4 gespeist. Der Strom wird über eine Stromquelle IER 31 definiert. Die Stromquelle IER 31 kann an einer beliebigen Stelle im Entladepfad angeordnet werden. Die Entladung der mittels des Schalters TER 30 in Reihe geschalteten Kapazitäten 17 und 18 erfolgt beginnend vom ersten Anschluss der Kapazität 17 über die LEDs 5 des Segments LED-S4 6 und den fünften Schalter TC4 26, den sechsten Schalter TCC2 27 zum zweiten Anschluss des zweiten Kondensators CER2 18 und vom ersten Anschluss dieses Kondensators 18 weiter über die Stromquelle IER 31, das Schaltelement TER 30 zum zweiten Anschluss des ersten Kondensators 17.

Eine schaltungstechnische Zusammenfassung der Stromquelle IER 31 mit dem Schaltelement TER 30 kann insbesondere für eine integrierte Lösung vorteilhaft sein.

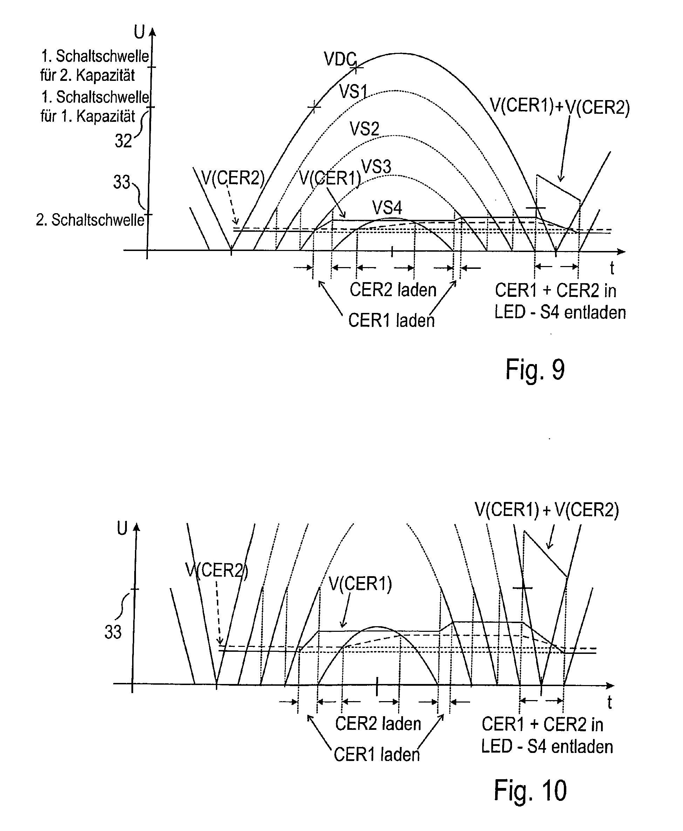

In der Figur 9 sind beispielhaft die Spannungsverläufe an den Kapazitäten CER1 17, CER2 18 sowie die Summenspannung (V_{CER1} + V_{CER2}) bei einer Hintereinanderschaltung der Kapazitäten 17 und 18 dargestellt.

In der Figur 9 sind im Hintergrund die Segmentspannungen (VDC, VS1, VS2, VS3 und VS4) wie sie aus der Figur 5 bereits bekannt sind dargestellt. Zum besseren Verständnis ist in der Figur 10 ausschnittsweise nur der untere Bereich des Spannungs-Zeit-Verlaufes aus der Figur 9 vergrößert dargestellt.

Für dieses Beispiel wurde angenommen, dass die Kapazität CER2 18 größer als die Kapazität CER1 17 ist. Diese Annahme ist für die Funktion der Schaltung aber nicht notwendig.

Die Dimensionierung der Konstantstromquelle für den Entladestrom IER 31 sollte so erfolgen, dass bei minimaler Versorgungsspannung VDC die Summenspannung am Ende des Entladevorgangs gerade noch höher ist, als die Flussspannung des Segments 6 LED-S4. Damit wird gewährleistet, dass der Strom während der gesamten Lücke auf maximalem Niveau konstant bleibt und der Wirkungsgrad der Schaltung bezogen auf die gewählte Topologie der LEDs 5 maximal wird.

Da bei höherer Versorgungsspannung VDC mehr Ladung im Kondensator CER2 18 gespeichert werden kann, ist auch eine Steuerung des Stromes der Quelle IER 31 in Abhängigkeit von der Höhe der Versorgung VDC oder der Spannungsdifferenz zwischen VDC und der Flussspannung der LED-Kette 4 vorteilhaft.

Beispielhaft endet der Entladevorgang, wenn die Spannung VDC wieder hoch genug ist, damit das Segment 6 LED-S1 bestromt wird. Ein zu beiden Seiten verlängerter Entladevorgang kann sinnvoll sein, wenn der Strom der Quelle ILED 8 zur Verbesserung des "Power Factor", also zur Reduzierung des Oberwellengehalts im Netzstrom in Abhängigkeit von der Momentanspannung VDC gesteuert wird und der Strom im Segment 6 LED-S1 zunächst kleiner ist als der Strom der Quelle IER 31. Da die verfügbare Ladung in den Kapazitäten CER1 17 und CER2 18 begrenzt ist, muss der Strom der Quelle IER 31 reduziert werden, wenn die Entladezeit verlängert wird.

Der beschriebene Vorgang wiederholt sich in jeder halben Netzperiode.

Zur weitere Reduzierung des "Flicker Index" wird erfindungsgemäß nachfolgendes vorgeschlagen.

Die zuvor beschriebene Maßnahme dient der Reduzierung des "Flicker Index", d. h. der relativen Welligkeit der Lichtabgabe als Folge der speisenden Wechselspannung, insbesondere dem "Auffüllen" der periodisch auftretenden Lücke, wenn die Netzspannung unter die Flussspannung eines LED Segments absinkt.

Eine weitere Reduzierung des "Flicker Index" wird durch eine Reduzierung der maximalen Helligkeit erreicht.

Bei bestehenden Lösungen ist ein Stromverlauf realisiert, der der Netzspannung folgt, was im Idealfall zu einem "Power Factor" von 1 führt, d. h. keine Oberwellen und keine Phasenverschiebung des Netzstroms verursacht. Sind Spannungs- und Stromverlauf sinusförmig, so folgt die Leistungsaufnahme einer sin² Funktion d. h., ihre Kurvenform ist ebenfalls sinusförmig mit der doppelten Frequenz und einem Offset gleich dem halben Spitze-Spitze-Wert, wie in der Figur 11 dargestellt ist.

Regional sind die Anforderungen bezüglich des zu erreichenden Power Factor und/oder des Oberwellengehalts für Leuchtmittel unterschiedlich.

Eine eher strikte Forderung begrenzt den Oberwellengehalt auf 20%. Durch Abflachen der Sinuskurve des die LEDs speisenden Stroms ILED einer Konstantstromquelle 8 kann diese Forderung eingehalten werden, wobei gleichzeitig der Maximalstrom und damit die maximale Helligkeit deutlich verringert wird. Damit reduziert sich auch der Flicker Index.

Die Figur 12 zeigt beispielhaft eine vorgeschlagene

Kurvenform mit einem Oberwellengehalt von < 20% im Vergleich zu einer Sinuskurve. Die Effektivwerte beider Verläufe sind identisch.

Dargestellt ist, dass der Stromverlauf des Stroms der Konstantstromquelle ILED 8 dem sinusförmigen Verlauf der Eingangswechselspannung (VDC) zumindest in seinem prinzipiellen Verlauf und insbesondere in den Nulldurchgängen angepasst wird. Erfindungsgemäß wird der Stromverlauf derart gesteuert, dass in der positiven und in der negativen Halbwelle der jeweilige Spitzenwert nicht erreicht wird. Beispielsweise kann der Strom ILED 8 nur noch 80%, 85%, 90% oder 95% des Spitzenwertes betragen oder jeden anderen Wert vorzugsweise im Aussteuerbereich zwischen 80% und 100% annehmen. Zu diesem Zweck wird der Strom nicht nur in seiner Amplitude begrenzt, sondern auch die Steilheit der Stromänderung in beiden Halbwellen erhöht. Im Beispiel verformt sich die Stromverlaufsfunktion von ihrem sinusförmigen Verlauf weg zu einem trapezförmigen Verlauf hin.

### Verfahren zur Ansteuerung von Leuchtdioden

### Bezugszeichenliste

- 1: LED-Ansteueranordnung
- 2: Eingang
- 3: Ausgänge
- 4: LED-Kette
- 5: LED
- 6: Segment
- 7: Anschluss/Ende
- 8: Konstantstromquelle
- 9: erster elektronischer Schalter
- 10: zweiter elektronischer Schalter
- 11: erste Steuereinheit
- 12: zweite Steuereinheit
- 13: erste Referenzspannung
- 14: zweite Referenzspannung
- 15: Komparator/Verstärker für "bleeder Strom"
- 16: Schaltelement TCBL
- 17: erster Ladekondensator (CER oder CER1)
- 18: zweiter Ladekondensator (CER2)
- 19: Knoten VCER
- 20: dritter elektronischer Schalter
- 21: vierter elektronischer Schalter
- 22: Diode D1
- 23: dritte Steuereinheit
- 24: vierte Steuereinheit
- 25: Diode D2
- 26: fünfter elektronischer Schalter
- 27: sechster elektronischer Schalter
- 28: Komparator/Verstärker AMPER
- 29: Pegelanpassung
- 30: Schaltelement TER
- 31: Stromquelle IER
- 32: Einschaltschwelle
- 33: zweite Schaltschwelle

## Patentansprüche

1. Verfahren zur Ansteuerung von Leuchtdioden, bei welchem eine Kette von in Reihe geschalteten Leuchtdioden bereitgestellt wird, welche in Segmente unterteilt ist, wobei jedes Segment mehrere Leuchtdioden beinhalten kann und einen ersten Anschluss sowie einen zweiten Anschluss aufweist und wobei die Kette mit einer aus einer sinusförmigen Netzwechselspannung gleichgerichteten Eingangswechselspannung (VDC) derart betrieben wird, dass die Segmente in Abhängigkeit der Amplitude der Eingangswechselspannung (VDC) nacheinander zu- und abgeschaltet werden und wobei der Strom der zugeschalteten LEDs mittels einer steuerbaren Konstantstromquelle gesteuert wird, **dadurch gekennzeichnet, dass** der Verlauf des Stroms der Konstantstromquelle ILED 8 derart geregelt wird, dass seine Nulldurchgänge mit denen der sinusförmigen Netzwechselspannung übereinstimmen und dass der Strom in seinen positiven und negativen Spitzenwerten begrenzt wird.

2. Verfahren nach Anspruch 1, **dadurch**
**gekennzeichnet, dass** der positive und negative Spitzenwert auf einen Bereich zwischen 80 und 95% des Maximalwertes begrenzt wird.

3. Verfahren nach Anspruch 1 oder 2, **dadurch gekennzeichnet, dass** der Anstieg des Stromes in der positiven und negativen Halbwelle gegenüber einen sinusförmigen Verlauf steiler erfolgt.
